# EUROPEAN PATENT SPECIFICATION

(11) **EP 0 797 176 B1**
(45) Date of publication and mention of the grant of the patent: **13.08.2003**
(21) Application number: 97104509.1
(22) Date of filing: 17.03.1997
(51) Int. Cl.: G08B 5/22

(54) **Radio paging receiver with message displaying function and method of controlling the same**
Funkrufempfänger mit Nachrichtenanzeigefunktion und Steuerungsverfahren dafür
Récepteur d'appel radio avec fonction d'affichage de messages et méthode de commande de ce récepteur

(30) Priority: 22.03.1996 JP 6637396
(43) Date of publication of application: 24.09.1997
(73) Proprietor: NEC CORPORATION, Tokyo (JP)
(72) Inventor: Uchida, Jun, Kakegawa-shi, Shizuoka (JP)
(74) Representative: VOSSIUS & PARTNER

(56) References cited:
- EP-A- 0 498 660
- EP-A- 0 675 467
- WO-A-93/09520
- US-A- 5 075 684

## Description

This invention relates to a radio paging receiver, and more particularly to a radio paging receiver with a displaying function which stores messages accompanied by paging calls in directories provided with corresponding paging numbers and displays stored messages in an arbitrary directory together and successively.

As an example of a conventional radio paging receiver with a message displaying function, a "Paging Receiver (Selective Call Receiver)" is disclosed in JP-A-257127/92.

The paging receiver mentioned above has a plurality of paging numbers and received message information with paging calls are sorted and displayed together in accordance with call discrimination information corresponding to the paging numbers. In particular, when various information services are received by a single receiver in such a manner for instance that stock price information is received with a certain paging number while exchange rate information is received with another paging number, message information can be sorted and displayed together in accordance with the call discrimination information, and consequently, understanding or recognition of information from each information service is remarkably facilitated for a user.

However, the paging receiver cannot display the message information belonging to a particular information service preferentially to other message information.

US-A-5 075 684 discloses a selective call message management system with a three step hierarchy for selecting source files. Source files with unread messages are selected first, source files having a priority attached and which have not been previously selected are selected next, and remaining previously unselected source files are selected finally.

It is an object of the present invention to provide a radio paging receiver and a method of controlling the paging receiver, wherein, when reception messages stored in directories corresponding to paging numbers are to be displayed from directory to directory, messages stored in a directory corresponding to a particular paging number can immediately be displayed preferentially according to-the working mode setting by switch operation by the user of the paging receiver.

It is aimed that the user can confirm messages sent through a particular paging number immediately at any time, or he can confirm messages sent through one of the selected paging numbers when a new message is displayed through the same number.

This object is achieved with the features of the claims.

An embodiment of the present invention is described below with reference to the drawings.
FIG. 1 is a block diagram showing an embodiment of a radio paging receiver with a message displaying function of the present invention;
FIG. 2 is a diagrammatic view illustrating an example of a directory composition in a RAM of the radio paging receiver shown in FIG. 1;
FIG. 3 is a flow chart illustrating a flow for setting of a home directory or "AUTO CHANGE" directories in the radio paging receiver shown in FIG. 1;
FIG. 4 is a flow chart illustrating a flow from reception of a message to displaying of the message for confirmation in the radio paging receiver shown in FIG. 1; and
FIG. 5 is a schematic view showing display contents of a display unit in different steps shown in FIGS. 3 and 4.

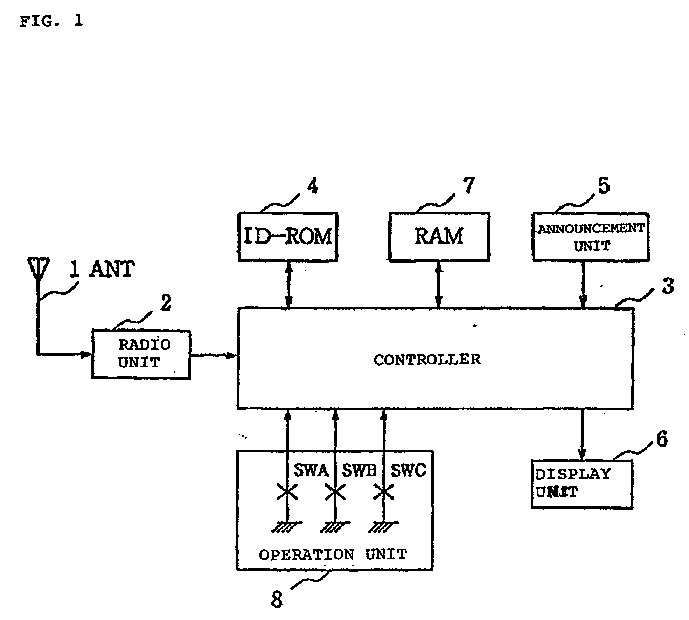

Referring to FIG. 1, a radio paging receiver with message displaying function of the present embodiment includes antenna (ANT) 1, radio unit 2 for amplifying and demodulating a radio signal received by antenna 1, ID-ROM 4 for storing a plurality of paging numbers of the radio paging receiver, announcement unit 5 for announcing that the receiver is being called, display unit 6 for displaying a message of the received radio signal, RAM 7 for storing received messages in directories which correspond to paging numbers, operation unit 8 on which a plurality of switches (including a menu display switch (SWA), a settlement switch (SWB) and a selection switch (SWC)) operated by a user of the radio paging receiver are mounted, and controller 3 for controlling operation of the receiver such as confirmation and announcement of reception of paging calls to the receiver, and storing and displaying of the received messages in response to manual operation of switches of operation unit 8.

The user can, while observing the screen of display unit 6, manually operate a switch or switches of operation unit 8 to set a home directory mode and select a directory (home directory) which has the highest preferential ranking for displaying among all the directories or to set an "AUTO CHANGE" mode and select a plurality of directories ("AUTO CHANGE" directories) to one of which the highest preferential display ranking is automatically given in response to an occurrence situation of paging calls. In "AUTO CHANGE" mode, the preference is given to a directory among those selected directories which corresponds to a paging number of the latest paging call. Accordingly the preferential display directory varies in response to an occurrence situation of paging calls.

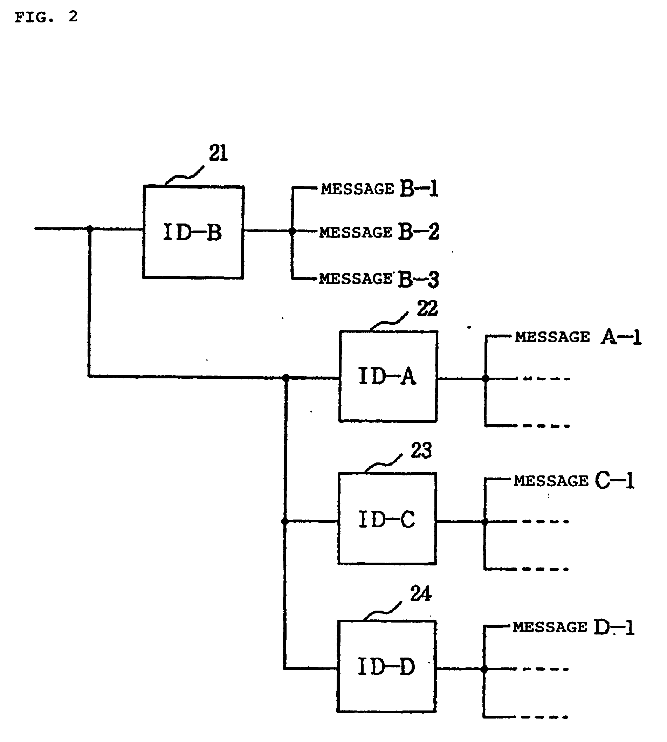

FIG. 2 is a diagrammatic view illustrating an example of a directory composition in RAM 7.

For example, a home directory 21 has the highest preferential display ranking, and ID-B denotes a paging number of home directory 21, and messages B-1, B-2 and B-3 are all messages stored in home directory 21.

Meanwhile, directories 22, 23 and 24 have ordinary display ranking other than the highest preferential display ranking and have paging numbers ID-A, ID-B and ID-C, respectively. Further, messages A-1 and so forth, messages C-1 and so forth, and messages D-1 and so forth have been received and stored in the directories 22, 23 and 24 in RAM 7.

In the radio paging receiver shown in FIG. 1, when it is in a home directory mode, the user can depress a switch or switches of operation unit 8 to arbitrarily set a home directory corresponding to the paging number ID-B for example. However, when the radio paging receiver is in an "AUTO CHANGE" mode, he can set a plurality of "AUTO CHANGE" directories corresponding to paging numbers ID-A and ID-C for example, whose preferential display ranking are automatically determined in accordance with whichever paging number is that of the latest paging call received. In this instance, the preferential display directory is not fixed, but varies between ID-A and ID-C.

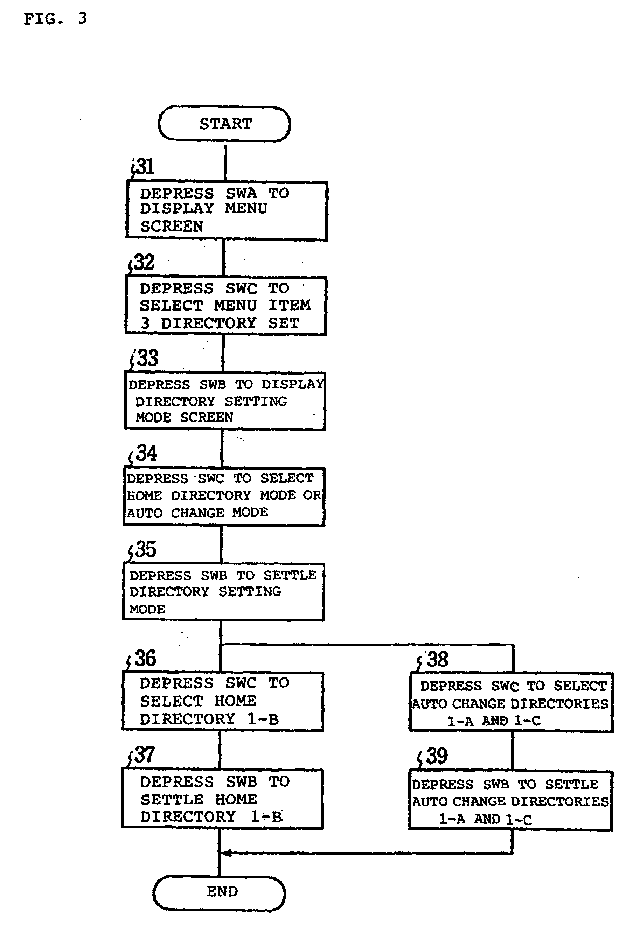

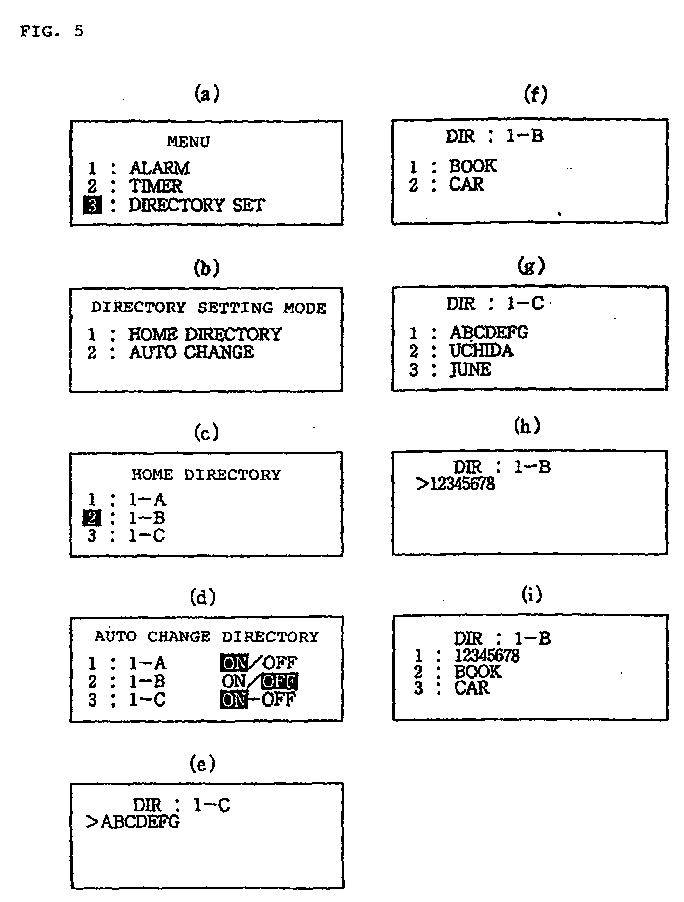

Next, operation of the switches and display contents are described in detail with reference to FIGS. 3, 4 and 5. It is to be noted that, in FIG. 5, reference symbols 1-A, 1-B and 1-C denote directories (DIR) corresponding to the paging numbers ID-A, ID-B and ID-C in FIG. 2, respectively.

First, a method of setting a home directory or "AUTO CHANGE" directories is described.

Referring to FIG. 3, if the user depresses switch SWA of operation unit 8, then "MENU" screen (FIG. 5(a)) is displayed on display unit 6 (step 31). Then, one of "1: ALARM", "2: TIMER" and "3: DIRECTORY SET" is selected by depression of switch SWC (step 32).

If the user selects "3: DIRECTORY SET" in this step 32 and then depresses switch SWB, then "DIRECTORY SETTING MODE" screen (FIG. 5(b)) is displayed on display unit 6 (step 33).

Then, the user depresses switch SWC to select one of "1: HOME DIRECTORY" mode and "2: AUTO CHANGE" mode (step 34) and depresses switch SWB to settle the result of the selection (step 35).

If the user selects "1: HOME DIRECTORY" mode in step 34 and then settles the selection in step 35, then "HOME DIRECTORY" screen (FIG. 5(c)) is displayed on display unit 6. Thereupon, if the user depresses switch SWC to select "2: 1-B" (step 36) and then depresses switch SWB to settle the selection, then setting of a home directory 1-B is completed thereby (step 37).

On the other hand, if the user selects "2: AUTO CHANGE" mode in step 34 and settles the selection in step 35, then "AUTO CHANGE DIRECTORY" screen (FIG. 5(d)) is displayed on display unit 6. Thereupon, if the user depresses switch SWC to select ON for "1: 1-A" and "3: 1-C" but keeps OFF for "2: 1-B" (step 38) and then depresses switch SWB to settle the selections, then setting of "AUTO CHANGE" directories 1-A and 1-C is completed thereby (step 39).

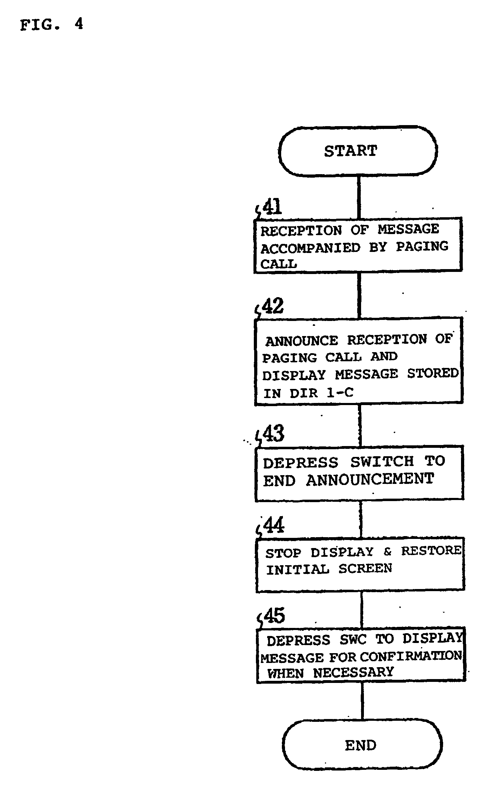

Next, a process from reception of a paging call to displaying of stored messages for confirmation is described with reference to FIG. 4.

If a message to be stored into directory 1-C is received for instance (step 41) after setting of a home directory 1-B or "AUTO CHANGE" directories 1-A and 1-C is completed in step 37 or step 39, whichever a "HOME DIRECTORY" mode or an "AUTO CHANGE" mode has been set, the directory name "DIR: 1-C" and a stored message ">ABCDEFG" in the same directory are displayed as seen in FIG. 5(e) at the time of announcing the reception of the paging call (step 42).

Then, if one of the switches of operation unit 8 is depressed, the announcement comes to an end (step 43) and the displaying is stopped and the waiting state (initial screen) is restored (step 44). The announcement of the reception of a paging call and the displaying of the messages stored as described above are performed for all paging calls received with messages irrespective of the display ranking.

Thereafter, when necessary, the user depresses the switch SWC to display the stored messages to confirm them (step 45). In the "HOME DIRECTORY" mode, if the home directory is set to directory 1-B, a message screen (FIG. 5(f)) of "DIR: 1-B" is displayed immediately on display unit 6. (Here, if the user depresses switch SWC to scroll the screen in order to confirm the messages of directory 1-C, then a message screen (FIG. 5(g)) of "DIR: 1-C" can be displayed.)

On the other hand, in the "AUTO CHANGE" mode, if the latest message received and stored in the auto change directories 1-A and 1-C is the message stored in directory 1-C, when the user depresses switch SWC in step 45, directory 1-C takes preference and the message screen (FIG. 5(g)) of "DIR: 1-C" is displayed, thereby completing confirmation of the messages. In this instance, it is to be noted that messages 2: UCHIDA and 3: JUNE in FIG. 5(g) are messages received and stored after storing the message 1 ABCDEFG shown in Fig. 5(e).

In the "AUTO CHANGE" mode, when directory 1-B has been set to "OFF" in steps 38 and 39, even if one of the messages of directory 1-B is the latest message, the directory 1-B does not have the highest preferential ranking. In this mode, as described above, the messages stored in the directory 1-C (FIG. 5(g)) are displayed preferentially. (If the user depresses switch SWC to scroll the screen, then the messages of the directory 1-B (FIG. 5(i)) can be displayed.)

In this manner, it can be seen that a user who always wants to confirm the messages stored in a particular directory preferentially should use the home directory mode, but another user to whom the information stored in several selected directories are equally important should use "AUTO CHANGE" mode.

## Claims

1. A radio paging receiver with a message displaying function which has a plurality of paging numbers and stores messages accompanied by paging calls into individual directories, with each individual directory corresponding to one of said paging numbers and storing the plurality of said messages corresponding to said paging number and displays said messages from directory to directory as occasion demands,
said receiver comprising a preferential display directory setting means (3) for determining and setting as a preferential display directory among said directories the highest preferential directory which has the highest preferential ranking for displaying,
wherein irrespective of the display ranking all paging calls are displayed at the time of announcing the reception of the paging call and afterwards, when the messages stored in said directories are to be displayed, the plurality of messages stored in said preferential display directory determined by said preferential display directory setting means (3) is displayed always first and together,
and wherein said preferential display directory setting means (3) comprises a first preferential display directory setting means for determining as said preferential display directory the directory which corresponds to the paging number selected by a user of the radio paging receiver.

2. A radio paging receiver as claimed in claim 1, wherein, said preferential display directory setting means (3) comprises a second preferential display directory setting means for determining as said preferential display directory the directory from among the directories corresponding to a plurality of paging numbers selected by the user which corresponds to the paging number of the paging call which was received most recently in time, and
said preferential display directory is determined by one of said first and second preferential display directory setting means selected by the user.

3. A method of controlling a radio paging receiver with a message displaying function which has a plurality of paging numbers and stores messages accompanied by paging calls into individual directories, with each individual directory corresponding to one of said paging numbers and storing the plurality of said messages corresponding to said paging number and displaying said messages from directory to directory as occasion demands,
said method comprising the steps of
selecting and setting as a preferential display directory from among said directories the highest preferential directory which has the highest preferential ranking for displaying,
displaying irrespective of the display ranking all paging calls at the time of announcing the reception of the paging call and afterwards, when the messages stored in said directories are to be displayed, displaying the plurality of messages stored in said preferential display directory always first and together, and
determining as said preferential display directory the directory which corresponds to the paging number selected by a user of the radio paging receiver, or the directory from among the directories corresponding to a plurality of paging numbers selected by the user which corresponds to the paging number of the paging call which was received most recently in time.

## Patentansprüche

1. Funkrufempfänger mit einer Meldungsdarstellungsfunktion, wobei der Funkrufempfänger mehrere Rufnummern aufweist und Funkrufen zugeordnete Meldungen in individuellen Verzeichnissen speichert, wobei jedes individuelle Verzeichnis einer der Rufnummern zugeordnet ist, und
wobei der Funkrufempfänger die mehreren Meldungen entsprechend den Rufnummern speichert und die Meldungen nach Bedarf von Verzeichnis zu Verzeichnis darstellt;
wobei der Empfänger eine Einrichtung (3) zum Setzen eines Verzeichnisses mit der bevorzugten Darstellung aufweist, um als Verzeichnis mit der bevorzugten Darstellung unter den Verzeichnissen dasjenige Verzeichnis mit höchster Priorität zu bestimmen und zu setzen, dem die höchste Priorität für eine Darstellung zugeordnet ist;
wobei zum Zeitpunkt der Ankündigung des Empfangs eines Funkrufs alle Funkrufe unabhängig von der Darstellungspriorität dargestellt werden, und wobei anschließend, wenn die in den Verzeichnissen gespeicherten Meldungen dargestellt werden sollen, die mehreren Meldungen, die in dem durch die Einrichtung (3) zum Setzen eines Verzeichnisses mit der bevorzugten Darstellung bestimmten Verzeichnis mit der bevorzugten Darstellung gespeichert sind, immer zuerst und zusammen dargestellt werden;
und wobei die Einrichtung (3) zum Setzen eines Verzeichnisses mit der bevorzugten Darstellung eine erste Einrichtung zum Setzen eines Verzeichnisses mit der bevorzugten Darstellung aufweist, um als das Verzeichnis mit der bevorzugten Darstellung dasjenige Verzeichnis zu bestimmen, das der durch einen Benutzer des Funkrufempfängers ausgewählten Rufnummer zugeordnet ist.

2. Funkrufempfänger nach Anspruch 1, wobei die Einrichtung (3) zum Setzen eines Verzeichnisses mit der bevorzugten Darstellung eine zweite Einrichtung zum Setzen eines Verzeichnisses mit der bevorzugten Darstellung aufweist, um als das Verzeichnis mit der bevorzugten Darstellung dasjenige Verzeichnis unter den Verzeichnissen, die mehreren durch den Benutzer ausgewählten Rufnummern zugeordnet sind, zu bestimmen, das der Rufnummer des zuletzt empfangenen Funkrufs zugeordnet ist;
und wobei das Verzeichnis mit der bevorzugten Darstellung durch die durch den Benutzer ausgewählte erste oder zweite Einrichtung zum Setzen eines Verzeichnisses mit der bevorzugten Darstellung bestimmt wird.

3. Verfahren zum Steuern eines Funkrufempfängers mit einer Meldungsdarstellungsfunktion, der mehrere Rufnummern aufweist und Funkrufen zugeordnete Meldungen in individuellen Verzeichnissen speichert, wobei jedes individuelle Verzeichnis einer der Rufnummern zugeordnet ist, und wobei in jedem individuellen Verzeichnis die mehreren, der entsprechenden Rufnummer zugeordneten Meldungen gespeichert sind, und wobei die Meldungen nach Bedarf von Verzeichnis zu Verzeichnis dargestellt werden;
wobei das Verfahren die Schritte aufweist:
Auswählen und Setzen des Verzeichnisses mit der bevorzugten Darstellung aus dem Verzeichnis mit der höchsten Priorität unter den Verzeichnissen, das die höchste Darstellungspriorität hat;
Darstellen aller Funkrufe zum Zeitpunkt der Ankündigung des Empfangs des Funkrufs unabhängig von der Darstellungspriorität, wobei anschließend, wenn die in den Verzeichnissen gespeicherten Meldungen dargestellt werden sollen, die mehreren im Verzeichnis mit der bevorzugten Darstellung gespeicherten Meldungen immer zuerst und zusammen dargestellt werden; und
Bestimmen desjenigen Verzeichnisses, das der durch einen Benutzer des Funkrufempfängers ausgewählten Rufnummer zugeordnet ist, oder desjenigen Verzeichnisses unter Verzeichnissen, die mehreren durch den Benutzer ausgewählten Rufnummern zugeordnet sind, das der Rufnummer des zuletzt empfangenen Funkrufs zugeordnet ist, als das Verzeichnis mit der bevorzugten Darstellung.

## Revendications

1. Récepteur radio de recherche de personnes ayant une fonction d'affichage de messages qui a une pluralité de numéros de recherche de personnes et mémorise des messages accompagnés d'appels de recherche de personnes dans des répertoires individuels, chaque répertoire individuel correspondant à un numéro parmi lesdits numéros de recherche de personnes et mémorisant la pluralité desdits messages correspondant audit numéro de recherche de personnes, et affiche lesdits messages d'un répertoire à un autre à la demande,
ledit récepteur comportant des moyens (3) d'établissement de répertoire d'affichage préférentiel pour déterminer et établir en tant que répertoire d'affichage préférentiel parmi lesdits répertoires le répertoire de préférence la plus élevée ayant le rang préférentiel le plus élevé pour l'affichage,
dans lequel indépendamment du rang d'affichage, tous les appels de recherche de personnes sont affichés au moment de l'annonce de la réception de l'appel de recherche de personnes et ensuite, lorsque les messages mémorisés dans lesdits répertoires doivent être affichés, la pluralité de messages mémorisés dans ledit répertoire d'affichage préférentiel déterminé par lesdits moyens (3) d'établissement de répertoire d'affichage préférentiel sont toujours affichés en premier et ensemble,
et dans lequel lesdits moyens (3) d'établissement de répertoire d'affichage préférentiel comportent des premiers moyens d'établissement de répertoire d'affichage préférentiel pour déterminer en tant que dit répertoire d'affichage préférentiel le répertoire qui correspond au numéro de recherche de personnes sélectionné par un utilisateur du récepteur radio de recherche de personnes.

2. Récepteur radio de recherche de personnes selon la revendication 1, dans lequel, lesdits moyens (3) d'établissement de répertoire d'affichage préférentiel comportent des seconds moyens d'établissement de répertoire d'affichage préférentiel pour déterminer en tant que dit répertoire d'affichage préférentiel le répertoire parmi les répertoires correspondant à une pluralité de numéros de recherche de personnes sélectionnés par l'utilisateur qui correspond au numéro de recherche de personnes de l'appel de recherche de personnes ayant été reçu le plus récemment, et
ledit répertoire d'affichage préférentiel est déterminé parmi l'un desdits premiers et seconds moyens d'établissement de répertoire d'affichage préférentiel sélectionnés par l'utilisateur.

3. Procédé de commande d'un récepteur radio de recherche de personnes ayant une fonction d'affichage de messages qui a une pluralité de numéros de recherche de personnes et mémorise des messages accompagnés d'appels de recherche de personnes dans des répertoires individuels, chaque répertoire individuel correspondant à un numéro parmi lesdits numéros de recherche de personnes et mémorisant la pluralité desdits messages correspondant audit numéro de recherche de personnes, et affiche lesdits messages d'un répertoire à un autre à la demande,
ledit procédé comportant les étapes consistant à
sélectionner et établir en tant que répertoire d'affichage préférentiel parmi lesdits répertoires le répertoire de préférence la plus élevée ayant le rang préférentiel le plus élevé pour l'affichage,
afficher indépendamment du rang d'affichage, tous les appels de recherche de personnes au moment de l'annonce de la réception de l'appel de recherche de personnes et ensuite, lorsque les messages mémorisés dans lesdits répertoires doivent être affichés, toujours afficher la pluralité de messages mémorisés dans ledit répertoire d'affichage préférentiel en premier et ensemble, et
déterminer en tant que répertoire d'affichage préférentiel le répertoire qui correspond au numéro de recherche de personnes sélectionné par un utilisateur du récepteur radio de recherche de personnes, ou le répertoire parmi les répertoires correspondant à une pluralité de numéros de recherche de personnes sélectionnés par l'utilisateur qui correspond au numéro de recherche de personnes de l'appel de recherche de personnes ayant été reçu le plus récemment.
